**Europäisches Patentamt**

**European Patent Office**

**Office européen des brevets**

(11) Numéro de publication: **0 225 225**
**B1**

(12) # FASCICULE DE BREVET EUROPÉEN

(45) Date de publication du fascicule du brevet:
**14.12.88**

(21) Numéro de dépôt: **86402370.0**

(22) Date de dépôt: **23.10.86**

(51) Int. Cl.⁴: **F 16 K 31/363, B 65 D 88/70**

(54) Valve d'alimentation d'une capacité puis de décharge brutale de cette capacité.

(30) Priorité: **31.10.85 FR 8516619**

(43) Date de publication de la demande:
**10.06.87 Bulletin 87/24**

(45) Mention de la délivrance du brevet:
**14.12.88 Bulletin 88/50**

(84) Etats contractants désignés:
**AT BE CH DE ES FR GB GR IT LI LU NL SE**

(56) Documents cité:
**EP-A-0 134 726**
**DE-A-2 917 954**
**FR-A-2 429 952**
**US-A-3 942 684**
**US-A-4 197 966**
**US-A-4 449 644**

(73) Titulaire: **Simoens, Hervé Hubert Jean, 40 Avenue Foch, F-59700 Marcq en Baroeul (FR)**

(72) Inventeur: **Simoens, Hervé Hubert Jean, 40 Avenue Foch, F-59700 Marcq en Baroeul (FR)**

(74) Mandataire: **Ecrepont, Robert, CABINET ECREPONT ROBERT 12, Place Simon Vollant, F-59800 Lille (FR)**

## Description

L'invention se rapporte à une valve d'alimentation d'une capacité puis de décharge brutale de cette capacité. Notamment mais non exclusivement l'invention trouve une application avantageuse dans l'amélioration de l'écoulement d'un produit granuleux ou pulvérulent en sortie d'installation telles que silos ou trémies.

Elle assure alors cette amélioration de l'écoulement par élimination des paquets stagnants dans des angles morts et/ou par destruction tant de la couche adhérant aux parois que du pont ou de la voute formée par le produit devant l'orifice de sortie.

Une telle valve de décharge brutale, quelquefois dénommée canon à air comprend, d'une part, une chambre d'alimentation pourvue d'un orifice de remplissage et d'un orifice de communication avec la capacité et, d'autre part, un parcours de décharge vers l'installation à laquelle la valve de décharge brutale s'applique.

La chambre d'alimentation est constituée à l'arrière d'un cylindre dans lequel est logé un piston libre en translation subissant, dans une direction, une poussée due à l'action d'une pression et notamment à celle du gaz introduit dans la chambre d'alimentation en vue du remplissage de la capacité.

Pour contrôler la circulation du gaz dans le parcours de décharge, celui-ci est scindé en deux tronçons par un siège avec lequel coopère un organe d'obturation que porte ou réalise directement le piston et dont la mise en place est assurée par la susdite pression poussant le piston.

Dès que, dans la chambre d'alimentation, la pression correspondante est relachée, la pression du gaz présent dans la capacité agit sur le piston dans une direction opposée à celle de la poussée précitée et fait revenir d'un coup sec le piston qui ouvre alors violemment la tubulure de décharge de la capacité jusqu'à réapparition de la pression d'alimentation pour un nouveau remplissage de la capacité.

Le piston est suffisamment long, et notamment de longueur supérieure à son diamètre pour assurer son guidage dans le cylindre aussi parfaitement que possible et éviter ainsi tout coïncement à l'intérieur du dit cylindre dans lequel il est ajusté pratiquement sans jeu pour, entre la chambre d'alimentation et l'avant du piston, établir l'étanchéité nécessaire à la garantie du renvoi de l'obturateur sur son siège.

Dans le but de relâcher la dite pression d'alimentation, l'orifice de remplissage est généralement relié à la source du gaz sous pression par l'intermédiaire d'un distributeur à plusieurs voies permettant notamment, et ce, à volonté, soit de fermer, soit de raccorder cet orifice aussi bien à la source de pression qu'à l'air libre.

Outre qu'elles sont complexes, donc très coûteuses, les premières valves de ce type à être apparues sur le marché (US-A-3 942 684) présentaient des inconvénients dont, d'une part, l'encombrement important de la valve et l'inertie importante du piston et, d'autre part, la perte de charge subie par le gaz lorsque, pour la décharge, il devait, au droit du siège de l'obturateur, franchir un passage de section relativement faible.

Le gaz mettait alors plus de temps pour s'écouler et cela réduisait donc considérablement la soudaineté de la décharge.

Plus récemment, afin d'éviter une perte de charge, est apparue une nouvelle valve de décharge brutale (FR-A-2 429 952) gardant un parcours de décharge de section pratiquement constante y compris au travers du siège.

Dans cette valve, le cylindre a une longueur au moins égale au double du diamètre du parcours de décharge dont l'un des tronçons est raccordé à l'avant du cylindre alors que l'autre tronçon est piqué radialement et vers l'avant du cylindre de manière que son orifice de raccordement au cylindre soit obturé par le piston lorsque celui-ci est à l'avant, mais soit largement ouvert lorsque le piston est à l'arrière. L'orifice de raccordement au cylindre réalise alors directement le siège de l'obturateur que forme la surface latérale du piston.

Pour son guidage, comme évoqué plus haut, mais aussi pour former l'obturateur de ce siège, le piston devait toujours avoir une longueur supérieure au diamètre de cet orifice de décharge ce qui conduisait également à un piston et à un cylindre qui étaient longs et donc lourds d'où pour le piston une inertie importante et une commande demandant un parcours important provoquant des chocs violents en fin de course mais aussi, tant pour le piston que pour le cylindre un coût matière et un encombrement qui étaient élevés.

Pour limiter les dégâts dus aux chocs du piston en fin de course, au moins l'une de ses extrémités est garnie d'une butée en matière relativement souple qui, toutefois, se détériore rapidement et, quelque soit, ne résiste pas lors d'une utilisation des valves dans des installations travaillant à des hautes températures comme c'est par exemple le cas en cimenterie.

Pour remédier à ces inconvénients, il est connu (EP-A-0 134 726) d'utiliser, d'une part, un piston de longueur très inférieure à son diamètre et, d'autre part, un cylindre à l'une des extrémités duquel pénètre une tubulure qui réalise le deuxième tronçon du parcours de décharge et qui, par son extrémité, réalisé le siège de l'obturateur porté par la face avant du piston.

Au moins l'une des pièces que sont cette extrémité de la tubulure et le piston en sa partie non couverte par le siège de l'obturateur délimite en outre, avec le cylindre, un conduit annulaire qui est en communication directe avec le premier tronçon du parcours de décharge mais qui est séparé de la chambre d'admission par le piston qui s'engage avec jeu dans le cylindre pour, au moins, réserver au gaz un passage suffisant depuis la chambre d'admission jusqu'au conduit annulaire et la capacité tandis que la pression du gaz admis s'exerçant sur la face arrière du piston maintient l'obturateur de ce celui-ci en appui sur son siège.

Cette disposition donne de bons résultats en ce qu'elle conduit à une vanne de faible encombrement et à un piston de faible inertie mais présente, par ailleurs, des limites du fait que la longueur du piston est trop faible par rapport à son diamètre pour qu'il soit auto-guidé par sa paroi périphérique. Pour pallier à son coïncement, son montage est fait avec beaucoup de jeu.

Par ailleurs, même si malgré la très faible inertie du piston, il suffit pour sa commande d'une faible pression du gaz dans la chambre, il est néanmoins nécessaire que cette pression d'alimentation soit spontanément rétablie après la décharge brusque de la capacité pour que la fermeture du parcours de décharge s'effectue sans retard.

Du fait de ce jeu important et des problèmes de fermeture, on ne peut empêcher que du produit pulvérulent qui est mis en suspension dans l'air par suite de la décharge revienne vers l'intérieur de la chambre d'admission et perturbe le fonctionnement de la vanne.

En outre, y compris pendant l'arrêt de la production, il faut, pour éviter une réouverture de l'obturateur maintenir en permanence la pression d'alimentation non seulement par une électrovanne mais encore par une production de gaz sous pression pour le cas de défaillance de l'électrovanne.

Un résultat que l'invention vise à obtenir est une vanne du type ci-dessus, perfectionnée de manière à empêcher le retour de produit pulvérulent vers la chambre d'admission.

Un autre résultat de l'invention est une tel le vanne dont la fermeture et le maintien de la fermeture du circuit de décharge n'est pas tributaire du retour de la pression d'alimentation. Est également un résultat de l'invention, une tel le vanne qui, sans risque de coïncement, a son piston qui est parfaitement guidé dans sa translation parallèle au cylindre.

A cet effet, l'invention a pour objet une vanne du type précité notamment caractérisé en ce que, en combinaison, le piston:

- est par sa partie qui sépare le conduit annulaire de la chambre d'admission, engagé dans le cylindre avec un jeu très faible, au plus sensiblement juste suffisant pour ménager au gaz un passage laminaire depuis la chambre d'admission jusqu'au conduit annulaire,

- porte sur sa face arrière un coulisseau d'axe parallèle à l'axe du cylindre, de faible section transversale et coopérant avec une coulisse de section complémentaire à celle du coulisseau et présentée à cet effet par le fond du cylindre, dans laquelle coulisse, lorsque l'obturateur du piston est appuyé sur son siège, le coulisseau s'engage sur une longueur qui, par rapport à sa plus grande dimension transversale, est encore suffisante pour garantir un excellent guidage du coulisseau et donc du piston qui le porte,

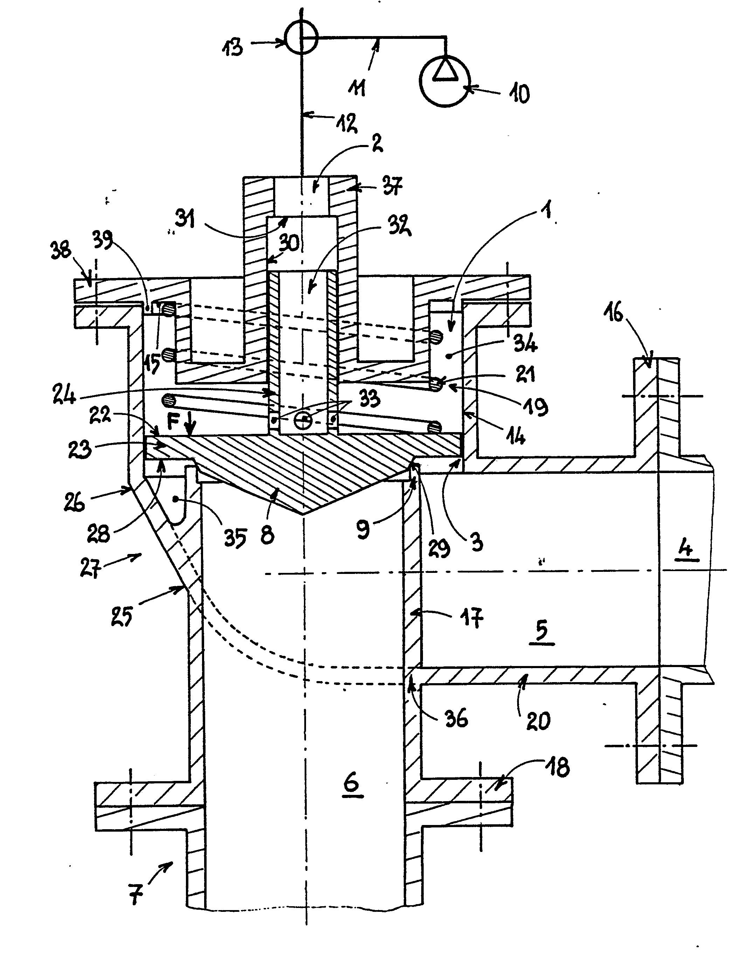

- reçoit sur sa face arrière la poussée d'un organe élastique intercale entre le fond du cylindre et la face arrière du piston. L'invention sera bien comprise à l'aide de la description ci-après faite à titre d'exemple non limitatif, en regard du dessin ci-annexé qui représente schématiquement une valve pourvue d'un piston selon l'invention.

En se reportant au dessin, on voit que la valve comprend:

- une chambre d'alimentation 1 pourvue d'un orifice de remplissage 2 et d'un passage 3 vers une capacité 4 et,

- scindé en deux tronçons 5, 6, un parcours de décharge de la capacité 4 vers une installation 7 à laquelle la valve s'applique.

La chambre d'alimentation 1 est délimitée à l'arrière d'un cylindre 14 par un piston 8 subissant, dans le sens de la flèche F une poussée due à l'action de la pression du gaz introduit dans la chambre 1 en vue du remplissage de la capacité 4.

Pour contrôler la circulation du gaz dans le parcours de décharge 5, 6, celui-ci passe par un siège 9 coopérant avec un obturateur 29 directement porté par la face avant 28 du piston 8.

Le premier tronçon 5 du parcours de décharge s'étend de la capacité 4 au siège 9, alors que le deuxième tronçon 6 de ce parcours de décharge s'étend du siège 9 à l'installation 7 et forme la tubulure de décharge proprement dite.

Avantageusement, le piston 8 est de longueur très inférieure à son diamètre et se présente alors sensiblement sous la forme d'une plaque 23.

Dans le cylindre 14, à l'une de ses extrémités, pénètre une tubulure 17 qui réalise le deuxième tronçon 6 du parcours de décharge.

L'extrémité de cette tubulure 17 réalise le siège 9 de l'obturateur 29 porté par la face avant 28 du piston 8. L'une au moins des pièces que sont cette extrémité de tubulure 17 et le piston en sa partie non couverte par le siège de l'obturateur délimite en outre avec le cylindre 14 un conduit annulaire 35 qui est en communication directe avec le premier tronçon 5 du parcours de décharge, lui-même relié à la capacité 4 à remplir, mais qui est séparé de la chambre d'admission 1 par le piston 8.

Le piston 8 s'engage avec jeu dans le cylindre 14 pour, au moins, réserver au gaz le passage 3 nécessaire depuis la chambre d'admission 1 jusqu'au conduit annulaire 35 et la capacité 4. La pression du gaz admis s'exerçant sur la face arrière 22 du piston maintient l'obturateur 29 de celui-ci en appui sur son siège 9.

Afin que la mise en place de l'obturateur 29 ne soit pas directement et uniquement tributaire de la pression d'alimentation, le piston 8 est constamment sollicité vers le siège 9 par au moins un organe élastique 19 de tout type connu, mais de raideur compatible avec les efforts inhérents aux pressions de gaz utilisées c'est à dire de manière à préserver le fonctionnement de la vanne.

Dans un mode préféré de réalisation, l'organe élastique est un ressort de compression 21 s'appuyant sensiblement sur le fond 15 du cylindre 14 pour développer son action contre la face arrière 22 du piston 8.

Dès que dans la chambre 1, la pression d'alimentation est relâchée, la pression du gaz présent dans la capacité 4 agit également mais dans le sens opposé à la flèche F, sur la partie du piston 8 qui recouvre le conduit annulaire 35.

Cette pression fait alors revenir le piston d'un coup sec vers le fond 15 du cylindre en contrariant l'action de l'organe élastique 19.

L'obturateur 29 de ce piston 8 se décolle ainsi violemment du siège 9 et ouvre donc la tubulure de décharge 6.

Classiquement, dans le but de relâcher la dite pression d'alimentation, l'orifice de remplissage 2 est relié à une source 10 du gaz sous pression, grâce à une conduite en deux tronçons 11, 12 passant par une vanne à trois voies 13 permettant de fermer ou de raccorder cet orifice 2 et ce aussi bien à la source 10 qu'à l'air libre.

Dans un mode préféré de réalisation, pour obtenir une chute rapide de pression dans la chambre d'alimentation, la vanne trois voies est elle-même constituée d'une vanne du type de celle objet de la présente invention.

Le premier tronçon 5 du parcours de décharge est formé par une conduite 20 reliée latéralement au corps 36 de la vanne et notamment raccordé au conduit annulaire 35 ceinturant la tubulure 17 formant le second tronçon 6 du parcours.

A leur extrémité opposée, la conduite 20 et la tubulure 17 portent chacune une bride 16, 18 de raccordement respectivement avec la capacité 4 et avec l'installation 7.

Le conduit annulaire 35 est avantageusement de section transversale égale à la section interne du conduit et de la tubulure 17.

Cette section est en outre égale à la surface latérale d'un cylindre fictif prolongeant la tubulure jusqu'au piston en position reculée.

Le fond du conduit annulaire 35 est, de manière connue, formé par une partie tronconique 27 dont la grande base 26 est raccordée au cylindre 14 et dont la petite base 25 est raccordée sur la périphérie de l'élément tubulaire 17, laquelle conicité est telle qu'elle assure la constance de la section du raccordement entre la conduite 20 et le conduit annulaire 35. Par le respect de ces égalités de section, on obtient qu'il n'y ait pas de perte de charge.

Selon une caractéristique essentielle de l'invention, en combinaison, le piston 8:

- est par sa partie qui sépare le conduit annulaire 35 de la chambre d'admission 1, engagé dans le cylindre 14 avec un jeu très faible, au plus sensiblement juste suffisant pour ménager au gaz un passage laminaire 3 depuis la chambre d'admission 1 jusqu'au conduit annulaire 35,

- porte sur sa face arrière 22 un coulisseau 24 d'axe parallèle à l'axe du cylindre 14, de faible section transversale et coopérant avec une coulisse de section complémentaire à celle du coulisseau 24 et présentée à cet effet par le fond 15 du cylindre 14, dans laquelle coulisse 30, lorsque l'obturateur 29 du piston est appuyé sur son siège 9, le coulisseau 24 s'engage sur une longueur qui, par rapport à sa plus grande dimension transversale, est encore suffisante pour garantir un excellent guidage du coulisseau 24 et donc du piston 8 qui le porte,

- reçoit sur sa face arrière 22 la poussée d'un organe élastique 19 intercalé entre le fond 15 du cylindre 14 et la face arrière 22 du piston 8.

Dans un mode préféré, le coulisseau 24 est une tige cylindrique centrée sur l'axe du piston et la coulisse 30 est un alésage creusé dans un moyeu 37 d'un couvercle 38 de fermeture arrière lu cylindre 14. Le couvercle 38 comporte évidemment lui-même un moyen de centrage 39 dans le cylindre 14. La longueur du guidage du coulisseau est de préférence au moins égale au diamètre de ce coulisseau.

Grâce à ce guidage, le jeu du piston dans le cylindre peut être extrêmement réduit et, par exemple, d'un dixième de millimètre au rayon, ce qui suffit pour établir le passage laminaire du gaz mais est alors insuffisant pour le passage du produit conformément à l'invention:

- d'une part, l'orifice de remplissage 2 est réservé dans le fond 31 de la coulisse 30, et

- d'autre part, le coulisseau 24 comporte au moins un canal 32 globalement axial qui, par au moins un orifice 33, communique avec la chambre d'alimentation.

De préférence, les orifices 33 sont situés de manière telle qu'en position piston reculé, ils soient occultés par la coulisse de manière qu'à l'arrivée du gaz sous pression, celui-ci ne puisse gagner la chambre qu'après avoir vaincu l'inertie du piston.

Par exemple, les orifices 33 débouchent latéralement à la dite tige et ce, sensiblement au niveau de la face arrière 22 du piston.

De préférence, la tige guide 24 est êquipée de plusieurs orifices 33 régulièrement répartis à sa base.

On note que, lors de l'ouverture du siège 9 pour la décharge de la capacité, le piston 8 vient par sa face arrière 22 en butée sensiblement contre le fond 15 du cylindre 14 et que les orifices 33 de la base de la tige guide 24 sont masquées par la paroi de l'alésage 30 dans lequel s'est engagée la dite tige. Par cela, lors de la décharge de la capacité 4, on évite toute perte de gaz vers le circuit d'alimentation.

Bien entendu, pendant cette phase, l'organe élastique 19 tel le ressort 21 est comprimé et, pour éviter qu'en devenant jointives, les spires s'opposent au contact entre les faces en vis à vis du piston 8 et du cylindre 14, le fond 15 est formé par la face interne du moyeu 37 qui forme, quant à lui, une saillie qui délimite un logement annulaire 34 de dimension adéquate permettant le maintien du ressort et le logement de ses spires au moins pendant sa phase de compression.

En phase de détente, ce logement annulaire 34 continue avantageusement d'assurer le maintien du ressort en bonne position dans le cylindre 14.

L'homme de l'art est à même de déterminer les formes les plus appropriées pour l'obturateur 29 du piston 8 et pour le siège 9 et, de ce fait, elles ne sont pas spécialement décrites.

De préférence, le piston 8 et sa tige guide 24 seront monoblocs et notamment réalisés en matériau léger et par exemple en aluminium.

## Revendications

1. Valve d'alimentation en gaz d'une capacité (4) puis de décharge brutale de cette capacité vers une installation (7), laquelle valve comprend un cylindre (14) à l'arrière duquel un piston (8) délimite une chambre d'alimentation (1) pourvue d'un orifice (2) de remplissage et d'un passage (3) vers la capacité (4) et à l'avant duquel cylindre, sont raccordés les deux tronçons (5, 6) d'un parcours de décharge dans l'installation (7) du gaz venant de la capacité (4), en passant par un siège (9) coopérant avec une portée (29) du piston (8) qui réalise quant à lui un obturateur dont la mise en place peut être assurée par la pression du gaz introduit dans la chambre d'alimentation, qui agit sur la face arrière du piston en contrariant l'action de la pression du gaz présent dans la capacité, agissant quant à elle sur la partie de la face avant du piston qui n'est pas recouverte par le siège (9) pour, dès la chute de la pression dans la chambre d'alimentation, repousser brutalement le piston vers l'arrière et vider la capacité dans l'installation,

dans laquelle valve sont utilisés:

- un piston (8) de longueur très inférieure à son diamètre, et

- un cylindre (14) à l'une des extrémités duquel pénètre une tubulure (17) qui réalise le deuxième tronçon (6) du parcours de décharge (5, 6) et dont l'extrémité réalise quant à elle le siège (9) de l'obturateur (29) porté par la face avant (28) du piston (8),

au moins l'une des pièces que sont l'extrémité de cette tubulure (17) et le piston (8) en sa partie non couverte par le siège (9) de l'obturateur (29) délimitant avec le cylindre (14) un conduit annul aire (35) qui est en communication directe avec le premier tronçon (5) du parcours de décharge (5, 6) mais qui est séparé de la chambre d'admission (1) par le piston (8) qui s'engage avec jeu dans le cylindre (14) pour réserver au gaz un passage suffisant (3) depuis la chambre d'admission (1) jusqu'au conduit annulaire (35) et la capacité (4) tandis que la pression du gaz admis s'exerçant sur la face arrière (22) du piston (8) maintient l'obturateur (29) de celui-ci en appui sur le siège (9), cette valve étant <u>caractérisée</u> en ce qu'en combinaison, le piston (8):

- est par sa partie qui sépare le conduit annulaire (35) de la chambre d'admission (1), engagé dans le cylindre (14) avec un jeu très faible, au plus sensiblement juste suffisant pour ménager au gaz un passage laminaire (3) depuis la chambre d'admission (1) jusqu'au conduit annulaire (35),

- porte sur sa face arrière (22) un coulisseau (24) d'axe parallèle à l'axe du cylindre (14), de faible section transversale et coopérant avec une coulisse de section complémentaire à celle du coulisseau (24) et présentée à cet effet par le fond (15) du cylindre (14), dans laquelle coulisse (30), lorsque l'obturateur (29) du piston est appuyé sur son siège (9), le coulisseau (24) s'engage sur une longueur qui, par rapport à sa plus grande dimension transversale, est encore suffisante pour garantir un excellent guidage du coulisseau (24) et donc du piston (8) qui le porte,

- reçoit sur sa face arrière (22) la poussée d'un organe élastique (l9) intercalé entre le fond (15) du cylindre (14) et la face arrière (22) du piston (8).

2. Valve selon la revendication 1 caractérisée en ce que le coulisseau (24) est une tige cylindrique centrée sur l'axe du piston et en ce que la coulisse (30) est un alésage.

3. Valve selon la revendication 2 caractérisée en ce que l'alésage est creusé dans un moyeu (37) d'un couvercle (38) de fermeture arrière du cylindre (14)) le couvercle (38) comportant lui-même un moyen de centrage (39) dans le cylindre (14).

4. Valve selon l'une quelconque des revendications 1 à 3 caractérisée en ce que

- d'une part, l'orifice de remplissage (2) est réservé dans le fond (31) de la coulisse (30) et,

- d'autre part, le coulisseau (24) comporte au moins un canal (32) globalement axial qui, par au moins un orifice (33), communique avec la chambre d'alimentation 1.

5. Valve selon la revendication 4 caractérisée en ce que les orifices (33) sont situés de manière telle qu'en position piston reculé, ils soient occultés par la coulisse de manière qu'à l'arrivée du gaz sous pression, celui-ci ne puisse gagner la chambre qu'après avoir vaincu l'inertie du piston.

6. Valve selon l'une quelconque des revendications 1 à 5 caractérisée en ce que, pour éviter qu'en devenant jointives des spires s'opposent au contact entre les faces en vis à vis du piston (8) et du cylindre (14), le fond (15) est formé par la face interne du moyeu (37) qui forme, quant à lui, une saillie qui délimite un logement annulaire (34) de dimension adéquate permettant le maintien du ressort et le logement de ses spires au moins pendant sa phase de compression.

## Patentansprüche

1. Ventil zum Aufladen und nachfolgendem schnellen Entladen von Gas aus einem Behälter (4) gegen eine Installation (7), wobei das Ventil einen Zylinder (14) aufweist, an dessen hinteren Bereich ein Kolben (8) eine Ladekammer (1) begrenzt, die mit einer Einfüllöffnung (2) und mit einem Durchgang (3) zu den Behälter (4) versehen ist, und an dessen vorderem Teil des Zylinders zwei Teilabschnitte (5, 6) einer Entladestrecke in der Installation (7) des Gases, welches von dem Behälter (4) kommt, angeschlossen sind, wobei das Gas einen Sitz (9) passiert, der mit einem Radius (29) des Kolbens (8) zusammenwirkt, der selbst einen Verschluß bildet, dessen Instellungbringen durch den Druck des in die Ladekammer eingeführten Gases sichergestellt werden kann, welches auf die rückseitige Stirnfläche des Kolbens einwirkt und die Wirkung des in dem Behälter befindlichen Gases hindert und selbst auf dem Teil der vorderen Stirnfläche wirkt, die nicht durch den Sitz (9) abgedeckt ist, um beim Druckabfall in der Ladekammer den Kolben plötzlich nach hinten zu schieben und den Behälter in die Installation zu entleeren, wobei das Ventil aufweist:

einen Kolben (8), dessen Länge klein bezüglich seines Durchmesser ist, und

einen Zylinder (14), an dessen einem Ende ein Stutzen (14) eindringt, der das zweite Teilstück (6) der Entladestrecke (5, 6) und dessen Ende selbst den Sitz (9) des Verschlusses bildet, der durch die vordere Stirnseite (28) des Kolbens (8) getragen ist,

zumindest eines der beiden Stücke den Endbereich des Stutzens (17) und des Kolbens (8) an dessen nicht durch den Sitz (9) des Verschlusses (29) abgedeckten Bereichs bilden, die mit dem Zylinder (14) eine ringförmige Führung bilden, die direkt mit dem ersten Teilstück (5) der Entladungsstrecke (5, 6) kommuniziert aber durch die Ladekammer (1) durch den Kolben (8) getrennt ist, der in dem Zylinder (14) mit Spiel eingreift, um für das Gas einen ausreichenden Durchlaß von der Ladekammer (1) bis zu der ringförmigen Führung (35) und zu dem Behälter (4) läßt, während der Druck des eintretenden Gases auf die rückwärtige Stirnseite (22) des Kolbens (8) wirkt und den Verschluß (29) in Anlage auf den Sitz (8) hält, gekennzeichnet durch folgende Kombination des Kolbens (8):

- daß dieser an seinem Teil, der die ringförmige Führung (35) der Eintrittskammer (1) trennt, in den Zylinder (14) mit einem schwachen Spiel eingreift, höchstens im wesentlichen gerade ausreichend, um dem Gas einen laminaren Durchgang (3) von der Eintrittskammer (1) bis zu der kreisringförmigen Führung (35) zu gestalten,

- daß er an seiner hinteren Stirnseite (22) einen Schieber (24) mit einer zur Achse des Zylinders (14) parallelen Achse mit geringem Querschnitt aufweist und mit einer Gleitführung zusammenwirkt, mit zu jenem Querschnitt des Schiebers (24) komplementären Querschnitt die zu diesem Zweck auf dem Grund (15) des Zylinders (14) vorgesehen ist, wobei in der Gleitführung (30), wenn der Verschluß (29) des Kolbens auf seinem Sitz (9) zur Anlage kommt, der Schieber (24) auf einer Länge angreift, die mit Bezug auf seine viel größere Quererstreckung noch ausreichend ist, um eine ausgezeichnete Führung des Schiebers (24) und infolgedessen des Kolbens (8) zu garantieren, der ihn trägt,

- daß auf seiner rückwärtigen Stirnseite (22) eine Längskraft eines elastischen Organs (19) aufgenommen wird, das zwischen dem Grund (15) des Zylinders (14) und der rückwärtigen Stirnseite (22) des Kolbens (8) angeordnet ist.

2. Ventil nach Anspruch 1, dadurch gekennzeichnet, daß der Schieber (24) eine zylindrische Stange ist, die bezüglich der Achse des Kolbens zentriert ist, und daß die Gleitführung (30) eine Bohrung ist.

3. Ventil nach Anspruch 2, dadurch gekennzeichnet, daß die Bohrung mittelseiner Nabe (37) eines hinteren Verschlußdeckels (38) des Zylinders (14) vertieft ist, wobei der Deckel (38) selbst ein Zentrierungsmittel (39) in dem Zylinder (14) aufweist.

4. Ventil nach einem der Ansprüche 1 bis 3, dadurch gekennzeichnet, daß

- einerseits die Einfüllöffnung (2) auf dem Boden (31) der Kulisse (30) reserviert ist und
- andererseits der Schieber (24) zumindest einen vollständig axialen Kanal (32) aufweist, der durch zumindest eine Öffnung (33) mit der Ladekammer (1) kommuniziert.

5. Ventil nach Anspruch 4, dadurch gekennzeichnet, daß die Öffnungen (33) derart angeordnet sind, daß in der Stellung des zurückgezogenen Kolbens sie durch die Gleitführung dergestalt abgedeckt sind, daß bei Ankunft von Gas unter Druck dieses die Kammer nur erreichen kann, nachdem die Trägheit des Kolbens überwunden worden ist.

6. Ventil nach einem der Ansprüche 1 bis 5, dadurch gekennzeichnet, daß zum Verhindern, daß Windungen in Berührung miteinander kommen, die der Berührung zwischen dem einander gegenüberliegenden Stirnseiten des Kolbens (8) und des Zylinders (14) ausgesetzt sind, der Grund (15) von der inneren Stirnseite der Habe (37) geformt ist, die selbst einen Vorsprung bildet, der eine ringförmige Aufnahme (34) mit angemessener Ausdehnung begrenzt, die das Halten der Feder und die Aufnahme ihrer Windungen, zumindest während der Dauer der Kompression zuläßt.

**Claims**

1. Valve for supplying a capacity (4) with gas and then abruptly discharging this capacity to an installation (7), said valve comprising a cylinder (14) at the rear of which a piston (8) defines a supply chamber (1) provided with a filling orifice (2) and with a passage (3) to the capacity (4), there being connected to the front of said cylinder the two parts (5, 6) of a discharge path for the gas from the capacity (4) to the installation (7), the path extending by way of a seat (9) cooperating with a bearing surface (29) of the piston (8), which latter thus constitutes a closure member whose positioning can be ensured by the pressure of the gas introduced into the supply chamber, such pressure acting on the rear face of the piston against the action of the gas pressure present in the capacity, the latter pressure acting on that part of the front face of the piston which is not covered by the seat (9), so that in response to a pressure drop in the supply chamber the piston is thrust abruptly to the rear to empty the capacity into the installation, in which valve there are used:

- a piston (8) whose length is very much less than its diameter, and

- a cylinder (14) penetrated at one of its ends by a tubular element (17) which constitutes the second part (6) of the discharge path (5, 6) and whose end constitutes in itself the seat (9) of the closure member (29) carried by the front face (28) of the piston (8), at least one of the parts which constitute the end of this tubular element (17) and the piston (8) in its part which is not covered by the seat (9) of the closure member (29) defining together with the cylinder (14) an annular passage (35) which communicates directly with the first part (5) of the discharge path (5, 6) but which is separated from the admission chamber (1) by the piston (8) which engages in the cylinder (14) with a sufficient degree of clearance to reserve a passage (3) sufficiently large for the gas to pass from the admission chamber (1) to the annular passage (35) and the capacity (4), whilst the pressure of the gas admitted, acting upon the rear face (22) of the piston (8), maintains the closure member (29) thereof resting on the seat (9),

this valve being characterised in that in combination, the piston (8):

- is engaged, by its part which separates the annular passage (35) from the admission chamber (1), in the cylinder (14) with a very small degree of clearance - at most, substantially just sufficient to allow for the gas a laminar passage (3) from the admission chamber (1) to the annular passage (35),

- carries on its rear face (22) a slide member (24) whose axis is parallel to the axis of the cylinder (14) and which is of small transversal section and which co-operates with a slide part whose section is complementary to that of the slide member (24) and which for this purpose is presented by the base (15) of the cylinder (14), and in said slide part (30), when the closure member (29) of the piston is supported on its seat (9), the slide member (24) engages, over a length which, in relation to its largest transversal dimension. Is still sufficient to guarantee an excellent guiding of the slide member (24) and therefore of the piston (8) which carries it,

- receives on its rear face (22) the thrust of a resilient member (19) inserted between the base (15) of the cylinder (14) and the rear face (22) of the piston (8).

2. Valve according to claim 1, characterised in that the slide member (24) is a cylindrical shank centred upon the axis of the piston, and in that the slide part (30) is a bore.

3. Valve according to claim 2, characterised in that the bore is hollowed out in a hub (37) of a lid (38) for rearward closure of the cylinder (14), said lid (38) itself comprising a means (39) for centering in the cylinder (14).

4. Valve according to any one of the claims 1 to 3, characterised in that:

- on the one hand, the filling orifice (2) is reserved in the base (31) of the slide part (30), and,

- on the other hand, the slide member (24) comprises at least one overall axial duct (32) which, by means of at least one orifice (33), communicates with the supply chamber (1).

5. Valve according to claim 4, characterised in that the orifices (33) are arranged in such a way that when the piston is in its retracted position, they are hidden by the slide part so that when the gas arrives under pressure, this latter cannot reach the chamber until after it has overcome the inertia of the piston.

6. Valve according to any one of the claims 1 to 5, characterised in that in order to prevent the spirals, by becoming compressed, from hindering contact between the faces of the piston (8) and of the cylinder (14) which are opposite one another, the base (15) is formed by the internal face of the hub (37) which, in itself, forms a projection which defines an annular aperture (34) whose dimension is adequate for enabling the spring to be held in place and for accommodating its spirals at least during its compression phase.